# EUROPEAN PATENT SPECIFICATION

(11) **EP 1 264 904 B1**
(45) Date of publication and mention of the grant of the patent: **03.01.2007**
(21) Application number: 00981960.8
(22) Date of filing: 15.11.2000
(51) Int. Cl.: C22C 1/06, C22F 3/02, B22D 1/00, B22D 11/114, C22C 1/02, C22B 21/06, C22B 9/02

(54) **METHOD FOR ULTRASONIC TREATMENT OF A MELT OF HYPEREUTECTIC SILUMINS**
VERFAHREN ZUR ULTRASCHALLBEHANDLUNG EINER ÜBEREUTEKTISCHEN SILUMIN-SCHMELZE
PROCEDE DE TRAITEMENT ULTRASONIQUE D'UN BAIN DE FUSION DE SILUMINES HYPEREUTECTIQUES

(30) Priority: 16.11.1999 RU 99123764
(43) Date of publication of application: 11.12.2002
(73) Proprietor: Eskin, Georgy Iosifovich, Moscow, 119333 (RU); Shapiro, Boris Mikhelievich, Moscow, 129515 (RU); Sukholinsky-Mestechkin, Sergei Leonidovich, Moscow, 103009 (RU)
(72) Inventor: Eskin, Georgy Iosifovich, Moscow, 119333 (RU); Shapiro, Boris Mikhelievich, Moscow, 129515 (RU); Sukholinsky-Mestechkin, Sergei Leonidovich, Moscow, 103009 (RU)
(74) Representative: Kietzmann, Manfred
(86) International application number: PCT/RU2000/000467
(87) International publication number: WO 2001/036695

(56) References cited:
- WO-A-98/30726
- GB-A- 1 527 916
- GB-A- 2 100 635
- RU-C1- 2 031 171
- SU-A- 353 790
- SU-A- 618 436

## Description

### (i) Field of engineering

The invention relates to the metallurgy of light alloys, and in particular, to methods for ultrasonic treatment of melts used in making cast shapes from hypereutectic silumins for the piston group.

### (ii) Prior art method

Known in the art are methods for continuous ingot casting from structural light metals (see: US Patent No. 4564059 A, B 22 D 27/02, 1986; German Patent No. DE 3126590 C2, B 22 D 11/10, 1985), using ultrasonic treatment applied to a melt in a fluid bath and continuously casting the melt into shape in developed cavitation conditions, to eventually reduce to the smallest possible fragments the granulated structure of ingots from various aluminum-base alloys of solid-solution type hardening by successive solidification. The above methods cannot, however, be utilized to treat alloys of hypereutectic silumin type, which solidify through volume solidification to produce primary excess-silicon crystals. Ultrasonic treatment, if used according to the above patents in a fluid bath (mold) to influence volume solidification, would be ineffective.

Also known in the art is a method for continuous casting of ingots using ultrasonic treatment of semi-solid melts (see: Swiss Application No. 682402 A5, B 22, F 3/02, 1993). According to the method, described in this patent, ultrasonic treatment is applied to melts in a fluid bath as well, the ultrasonic source being placed inside the heat end-piece of the mold, because hypereutectic silumins here solidify successively as well to produce solid-solution grains, without forming primary excess phase crystals.

The closest prior art of the present invention in the combination of feature (pertinent art) is a method for producing hypereutectic silumins (see: Journal of science and engineering Tekhnologia legkikh splavov, No. 3, 1997, pp. 23-28), according to which the structure of hypereutectic silumin is improved, with primary silicon crystals reduced to fragments and the fatigue strength of cast shaped pistons at elevated temperatures raised, through successively carrying out refining (degassing) and modification of the melt by adding modifying phosphorus-containing agents to the melt. This method does not, however, allow the desired degree of primary silicon crystal and intermetallic compound fragmentation to be achieved.

### (iii) Disclosure of the invention

The method for ultrasonic treatment of a melt of hypereutectic silumins that helps, in accordance with this invention, attain the above technical result that lies in ultimate degree of primary silicon crystal and intermetallic compound fragmentation in cash shapes from hypereutectic silumins, consists in degassing and successively modifying a melt by adding modifying phosphorus-containing agents thereto. Modification is, *according to the invention,* followed by ultrasonic treatment of the melt flow to achieve developed cavitation in the melt. Treatment is carried out in such a way that the volume of the cavitation region is coterminous with the full volume of the melt flowing through the treatment zone, and the duration of ultrasonic treatment of the melt flow depends on the concentration of the above-mentioned modifying agents in the melt ,and the longer duration of treatment corresponds to the smaller concentration of the agents. Each element of the melt flow is exposed to ultrasonic treatment for a duration of 0.15 second to 1.2 second, the concentration of the modifying agents in the melt can vary from 0.01% to 0.06% of the full amount of the melt.

For the purpose of ultrasonic treatment, a number of successive ultrasonic sources can be used.

In doing so, the temperature of the melt treated may be maintained during ultrasonic treatment 50°C to 80°C above the liquidus temperature of the hypereutectic silumin.

The method of this invention combines pretreating the melt by effectively removing hydrogen from the melt and adding thereto an agent to modify primary silicon crystals and the advantages of cavitation treatment of the molten metal to stimulate melt flow modification as the melt flows out of the furnace into a tundish or out of the furnace into a shape casting mold. Cavitation treatment of the melt flow allows the number of resulting nuclei of primary silicon crystal solidification in the form of aluminum phosphides to be increased significantly. The increase occurs as a result of a large number of ultra-dispersed nonmetallic solid impurities, which are always present in a real melt and usually have no part in the solidification process, being wetted and involved into the solidification process. Activation (wetting) of ultradispersed impurities in the cavitation field is associated with the high-speed pulsations of cavitation cavities forming and collapsing within one to three sound wave periods arid producing local cumulative jets and powerful microhydraulic shocks. At an ultrasonic treatment frequency of 18 to 25 kHz, one vibration period has a duration of 4÷5·10⁻⁵ seconds. This duration is several orders smaller than the real time it takes the melt to flow through the cavitation region. In other words, the required duration of ultrasonic effect on the melt in developed cavitation conditions is significantly smaller than the real time of any other melt treatment process.

Thus, the positive effect provided by the present invention, as compared with the prior art ones, consists in improving the performance characteristics of cast shapes of hypereutectic silumins (preferably cast pistons for internal combustion engines), in particular, raising the fatigue strength of castings at high operating temperatures, wear resistance, and other characteristics that depend on the dispersivity of primary silicon crystals in the melt structure.

### (iv) Preferable embodiment of the invention meant by the Applicant

The feasibility of embodiment of the invention characterized by the above-described combination of features may be illustrated with a description of the following *embodiment examples* as the best Applicant-meant embodiments of the present method of ultrasonic treatment of a melt of hypereutectic silumins.

### Example 1.

Hypereutectic silumin of the Al-Si-Cu-Ni-Mg system of type **AK18** (comprising: Si - 18%, Cu - 1.48%, Ni - 1.05%, Mg - 0.93%, Fe - 0.38%, and Ti - 0.05%, Al making up the balance) was, following degassing in a crucible furnace of 5 kg capacity and a modifying additive containing up to 0.02% phosphorus, was poured into a metal mold to produce a workpiece 92 mm in diameter and up to 300 mm high. As the melt flowed from the crucible furnace to the mold, it was exposed to ultrasonic treatment to achieve cavitation thereof in accordance with the present invention. As a result, a cavitation region of the melt flow having a volume of 21 cm³ was exposed to the effect of the ultrasonic source. The flow rate of the melt passing through the cavitation region was varied to alter the duration of cavitation treatment and, therefore, the efficiency of workpiece structure fragmentation.

The test treatment results contained in Table 1 show that ultrasonic treatment of a melt flow in developed cavitation conditions, in which each melt flow element is exposed to treatment for 0.15 second to 1.2 second, achieves silicon crystal fragmentation in the AK18 alloy below 30-40 microns, that is, to a half or a third of the size attainable without ultrasonic treatment. Moreover, the efficiency of fragmentation rises with duration of the melt in the cavitation region. For example, treatment duration of 1.0 to 1.2 second allows the size of silicon crystals to be reduced to between 15 and 25 microns.

### Example 2.

Hypereutectic silumin of the Al-Si-Cu-Ni-Mg system of type **AK18** (comprising: Si - 18%, Cu - 1.48%, Ni - 1.05%, Mg - 0.93%, Fe - 0.38%, and Ti - 0.05%, Al making up the balance) was, following degassing in a crucible furnace of 5 kg capacity and a modifying additive, was poured into a metal mold 92 mm in diameter and up to 300 mm high and the melt flow exposed to ultrasonic treatment during casting in developed cavitation conditions. Each element of the melt flow was exposed to ultrasonic treatment for 0.6 second (with the melt flowing through the ultrasonic treatment zone at a rate of 34.9 cm³ /s or 5 kg/min). In the process, the modifying agent concentration was raised from 0.01% to 0.06% phosphorus. The results of this test treatment given in Table 2 show that the efficiency of silicon crystal fragmentation depends significantly less on modifying agent concentration than on the duration of ultrasonic treatment of the melt flow.

### Example 3.

An **AK18** alloy of the same composition as in Examples 1 and 2 was, following melt degassing and modification by an additive containing 0.01% phosphorus, was poured into a crucible 92 mm in diameter and up to 300 mm high and ultrasonic treatment was applied to the melt flow being poured in developed cavitation conditions. Two successive ultrasound sources were used in this example (exposing the melt flow to cavitation treatment for 1.2 second). The test treatment results contained in Table 3 show the efficiency of primary silicon crystal disintegration in accordance with the present invention can be raised significantly by increasing the number of successive ultrasound sources.

### Example 4.

An **AK18** alloy of the same composition as in Examples 1 to 3 was, following melt degassing and modification by an additive containing 0.02% phosphorus, was poured into a crucible 92 mm in diameter and up to 300 mm high and ultrasonic treatment was applied to the melt flow being poured in developed cavitation conditions. Each melt flow element was exposed to treatment for 0.6 second (one ultrasound source being used) at different melt temperatures. The test treatment results given in Table 4 show that silicon crystals of the melt poured within the operating temperature range of 750°C to 800°C, or 30°-50°C above the liquidus temperature of the alloy, are effectively fragmented in hypereutectic silumins. Pouring temperature reduction to 730°C, that is, less than 30°C above the liquidus temperature, is undesirable, because the efficiency of fragmentation under the effect of ultrasonic treatment is reduced. It is likewise undesirable to raise the ultrasonic treatment temperature of the AK18 alloy (18% of Si) above 800°C because of a more active interaction between the melt and the ambient atmosphere and melt saturation with atmospheric moisture hydrogen.

The preceding examples show that for a maximum fragmentation of primary silicon crystals and crystals of intermetallic compounds forming within hypereutectic silumins on solidification by the volume solidification principle to be achieved, in accordance with the present invention, it is important to optimize the parameters of ultrasonic (cavitation) treatment of the melt flow prior to solidification thereof, the temperature of the melt being treated, and modifying agent concentration.

### (v) Substantiation for the possibility of industrial use of the invention

The preceding examples of the best embodiments of the invention show that the above-described *method for ultrasonic treatment of a melt of hypereutectic silumins* can be used in industry for making cast shapes from hypereutectic silumins (preferably cast pistons for internal combustion engines), which are notable for their high wear resistance and fatigue resistance of castings at high operating temperatures.

**Table 1. Influence of the change in duration (T) of ultrasonic treatment of each melt flow element on the efficiency of fragmentation of primary silicon crystals in AK18 type hypereutectic silumin.**

| No. | Melt flow rate, cm³/s | T, s | Average size of silicon crystals (Si), microns |
|---|---|---|---|
| 1 | 276 | 0.076 | 50-60 |
| 2 | 138 | 0.15 | 30-40 |
| 3 | 69.1 | 0.3 | 25-30 |
| 4 | 34.9 | 0.6 | 20-25 |
| 5 | 17.4 | 1.2 | 15-20 |

**Table 2. Influence of the change in phosphorus concentration on the efficiency of primary silicon crystal fragmentation in a AK18 type melt.**

| No. | Phosphorus concentration, % | Average size of silicon crystals (Si), microns |
|---|---|---|
| 1 | 0.01 | 25-30 |
| 2 | 0.02 | 20-25 |
| 3 | 0.04 | 15-20 |
| 4 | 0.06 | 15-20 |

**Table 3. Influence of the change in the number of operating ultrasonic sources on the efficiency of fragmentation of primary silicon crystals.**

| No. | Number of active ultrasonic sources | Average sizes of silicon crystals (Si), microns |
|---|---|---|
| 1 | 1 | 25-30 |
| 2 | 2 | 15-20 |

**Table 4. Influence of the change in melt flow temperature on the efficiency of fragmentation of primary silicon crystals under ultrasonic cavitation treatment.**

| No. | Melt temperature, °C | Average sizes of silicon crystals (Si), microns |
|---|---|---|
| 1 | 730 | 30-40 |
| 2 | 750 | 20-25 |
| 3 | 800 | 20-25 |

## Claims

1. A method for treating a melt of hypereutectic silumins, comprising degassing and successively modifying the melt by adding phosphorus-containing modifying agents thereto, **characterized in that**, modification is followed by ultrasonic treatment of the melt and development cavitation that are effected so that the volume of the cavitation region is coterminous with the entire volume of the melt flowing through the ultrasonic treatment zone, ultrasonic treatment of each element of the melt flow being effected for 0.15 second to 1.2 second, depending on the concentration of the aforesaid modifying agents in the melt, which varies from 0.01% to 0.06%.

2. A method as claimed in claim 1, **characterized in that** several successive ultrasound sources are used for ultrasonic treatment.

3. A method as claimed in claim 1 or 2, **characterized in that** the temperature of the melt treated is maintained during ultrasonic treatment 50°C to 80°C above the liquidus temperature of the hypereutectic silumin.

## Patentansprüche

1. Verfahren zur Behandlung einer übereutektischen Siluminschmelze umfassend das Entgasen und das nachfolgende Modifizieren der Schmelze durch Zugabe von Phosphor enthaltenden modifizierenden Mitteln (Agenzien), **dadurch gekennzeichnet, dass**
nach der Modifizierung eine Ultraschallbehandlung der Schmelze erfolgt, die eine Kavitation sicherstellt, derart, dass das Volumen des Kavitationsbereiches dem Volumen der Schmelze entspricht, das durch die Ultraschallbehandlungszone fließt, wobei die Ultraschallbehandlung jedes Teils des Schmelzflusses über 0,15 Sekunden bis 1,2 Sekunden erfolgt in Abhängigkeit von der Konzentration der besagten modifizierenden Mittel in der Schmelze, die variiert zwischen 0,01 % und 0,06 Vol. % der Schmelze.

2. Verfahren nach Anspruch 1, **dadurch gekennzeichnet, dass**
verschiedene aufeinanderfolgende Ultraschallquellen für die Ultraschallbehandlung genutzt werden.

3. Verfahren nach Anspruch 1 oder 2,**dadurch gekennzeichnet, dass**
während der Ultraschallbehandlung eine Temperatur der Schmelze aufrecht erhalten wird, die 50°C - 80 °C über der Schmelztemperatur des übereutektischen Silumins liegt.

## Revendications

1. Procédé de traitement d'un bain de silumines hypereutectiques, comprenant le dégazage et la modification successive du bain en y ajoutant des agents de modification contenant du phosphore, **caractérisé en ce que** la modification est suivie d'un traitement ultrasonique du bain et d'un développement de cavitation qui sont effectués de sorte que le volume de la zone de cavitation soit limitrophe avec le volume entier du bain coulant à travers la zone de traitement ultrasonique, le traitement ultrasonique de chaque élément du bain étant effectué pendant 0,15 seconde à 1,2 seconde, selon la concentration des agents de modification précités dans le bain, qui varie de 0,01 % à 0,06 %.

2. Procédé selon la revendication 1, **caractérisé en ce que** plusieurs sources d'ultrasons successives sont utilisées pour le traitement ultrasonique.

3. Procédé selon la revendication 1 ou 2, **caractérisé en ce que** la température du bain traité est maintenue au cours du traitement ultrasonique entre 50 °C et 80 °C au-dessus de la température du liquidus de la silumine hypereutectique.
